# EUROPÄISCHE PATENTSCHRIFT

(11) **EP 0 760 972 B1**
(45) Veröffentlichungstag und Bekanntmachung des Hinweises auf die Patenterteilung: **04.09.2002**
(21) Anmeldenummer: 95917907.8
(22) Anmeldetag: 15.05.1995
(51) Int. Cl.: G05B 19/05

(54) **PROGRAMMIERGERÄT**
PROGRAMMING DEVICE
PROGRAMMATEUR

(30) Priorität: 27.05.1994 DE 4418623
(43) Veröffentlichungstag der Anmeldung: 12.03.1997
(73) Patentinhaber: SIEMENS AKTIENGESELLSCHAFT, 80333 München (DE)
(72) Erfinder: HALLWIRTH, Volker, D-78112 St. Georgen (DE)
(86) Internationale Anmeldenummer: DE9500638
(87) Internationale Veröffentlichungsnummer: WO95033230

(56) Entgegenhaltungen:
- DE-A- 4 235 342
- ELEKTRONIK, Bd. 40, Nr. 21, Oktober 1991 MÜNCHEN,DE , Seiten 72+79-83, XP 000246073 DIPL.ING. M. HÄBEL UND DIPL.ING. C.WIWIE 'Hochsprache statt Maschinensprache'
- ELEKTRONIK, Bd. 42, Nr. 8, 20.April 1993 MÜNCHEN,DE, Seiten 44-48, XP 000363838 G. SÜSS 'Sprachnorm bringt Steuerung in Schwung'

## Beschreibung

Die Erfindung betrifft ein Verfahren zum Programmieren einer speicherprogrammierbaren Zustandssteuerung gemäß dem Oberbegriff des Anspruchs 1 sowie ein Programmiergerät gemäß dem Oberbegriff des Anspruchs 5.

Aus der DE-OS 37 43 438 ist eine Einrichtung bekannt, die nach Maßgabe eines Momentanzustandes und einer Eingangsvektorbelegung digitaler Prozesseingangsgrößen einen Übergang in einen Folgezustand und eine Übergabe neuer Steuerdaten an eine Ausgangsstufe bewirkt. Dabei ist eine Steuerdatei vorgesehen, welche in der Einrichtung hinterlegt ist und in der die Eingangsgrößen bzw. die Kombinationen dieser Eingangsgrößen vorgegeben sind, welche für den jeweiligen Momentanzustand relevant sind.

In der DE-OS 42 26 456 ist eine speicherprogrammierbare Zustandssteuerung beschrieben, die einen Zustandsübergang von einem Momentanzustand in einen Folgezustand für mehrere Prozessoren ermöglicht.

Mit dieser Zustandssteuerung bzw. bekannten Einrichtung werden Reaktionszeiten auf Änderungen der Eingangsdaten im Vergleich zu einer gewöhnlichen speicherprogrammierbaren Steuerung wesentlich verkürzt, die während des Steuerbetriebs einzelne Anweisungen des Steuerungsprogramms entsprechend einer Bearbeitung mit einer Von-Neumann-Maschine aus einem Speicher nach und nach ausliest, diese interpretiert und schließlich die entsprechenden Operationen ausführt.
Aus der Druckschrift "Automatisieren mit SIMATIC S5-155U", Hans Berger, 1989, ist ein Programmiergerät bekannt, das zum Umsetzen einer Steueraufgabe in ein Steuerungsprogramm für ein Automatisierungsgerät vorgesehen ist. Alle Funktionen der Steueraufgabe werden programmiert oder mit einer Darstellungsart "Anweisungsliste", "Funktionsplan" oder "Kontaktplan" beschrieben. Das Programmiergerät setzt die programmierten Funktionen unabhängig von den Darstellungsarten in einen entsprechenden Maschinencode um. Dieser Code enthält alle vom Anwender programmierten Steuerungsfunktionen und wird vom Automatisierungsgerät gelesen und interpretiert, nachdem der Code in das Automatisierungsgerät übertragen wurde. Mit diesem bekannten Programmiergerät ist es nur möglich, ein Steuerungsprogramm für eine speicherprogrammierbare Zustandssteuerung mit hohem Programmieraufwand zu erstellen.

Ein Verfahren gemäß dem Oberberiff des Anspruchs 1 sowie ein Programmiergerät gemäß dem Oberbergiff des Anspruchs 5 sind aus der DE-OS 42 35 342 bekannt. Das Programmiergerät weist einen Speicher auf, in welchem eine mit einem Software-Werkzeug erstellte Steueraufgabe in Form eines auf einer Anzeigevorrichtung darstellbaren Aktionszeitdiagramms hinterlegt ist, das Ein- und Ausgangssignale eines zu steuernden technischen Prozesses in Form binärer und/oder analoger Signale beschreibt. Das Aktionszeitdiagramm wird durch das Software-Werkzeug zur Erstellung eines Steuer- und Zustandscodes aufweisenden Steuerungsprogramms zur Lösung der Steueraufgabe, ausgehend von einem Momentanzustand, durch geeignete Auswertung von Pegelübergängen der Signale bearbeitet, und es werden entsprechende Eingangs-, Steuer- und Zustandscodes des Steuerungsprogramms für die Zustandssteuerung erstellt. Die Kenntnis einer Programmiersprache oder der in der Automatisierungstechnik üblichen Darstellungsarten für eine Steueraufgabe ist nicht erforderlich.

Der vorliegenden Erfindung liegt die Aufgabe zugrunde, ein Verfahren der eingangs genannten Art anzugeben, das eine vereinfachte Programmierung von speicherprogrammierbaren Zustandssteuerungen ermöglicht. Darüber hinaus ist ein Programmiergerät anzugeben, das zur Programmierung einer speicherprogrammierbaren Zustandssteuerung geeignet ist.

Im Hinblick auf das Verfahren wird diese Aufgabe gelöst durch die im kennzeichnenden Teil des Anspruchs 1 angegebenen Maßnahmen, im Hinblick auf das Programmiergerät durch die im kennzeichnenden Teil des Anspruchs 5 angegebenen Maßnahmen.

Der strukturierte Text ist in mehrere Teilstrukturen gegliedert, welche jeweils einem Zustand zugeordnet sind. Die entsprechend den Vorgaben einer Steueraufgabe möglichen Prozesszustände und ein sogenannter Startzustand können vorzugsweise zur besseren Programmübersicht in einer Kopfinformation hinterlegt sein. Jede Teilstruktur weist ein erstes Schlüsselwort mit einer einen Zustand kennzeichnenden Zeichenfolge auf, welcher mindestens eine Gruppe aus geordneten Paaren folgt, die jeweils aus einem Schlüsselwort und einer Textfolge bestehen. Ein erstes Paar weist ein zweites Schlüsselwort und mindestens einen Eingangsvektor in Form einer Zeichenfolge auf, der ein zweites Paar folgt, das aus einem dritten Schlüsselwort und einem Folgezustand in Form einer weiteren Zeichenfolge besteht. Falls es zur Lösung der Steueraufgabe erforderlich ist, müssen die Teilstrukturen ein drittes und viertes Paar aufweisen, von denen das dritte Paar mit einem vierten Schlüsselwort und mindestens einem Ausgangsvektor in Form einer Zeichenfolge versehen ist und das vierte Paar ein fünftes Schlüsselwort und mindestens einen durch eine Zeichenfolge gekennzeichneten Funktionsaufruf umfaßt.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden die Erfindung, deren Ausgestaltungen und Vorteile näher erläutert.

Es zeigen
- Figur 1: schematisch eine von einer speicherprogrammierbaren Zustandssteuerung gesteuerte Anlage,
- Figur 2 bis 7: eine Darstellung eines strukturierten Textes mit dazugehörigen Belegungen und
- Figur 8: ein Steuerungsprogramm für die speicherprogrammierbare Zustandssteuerung.

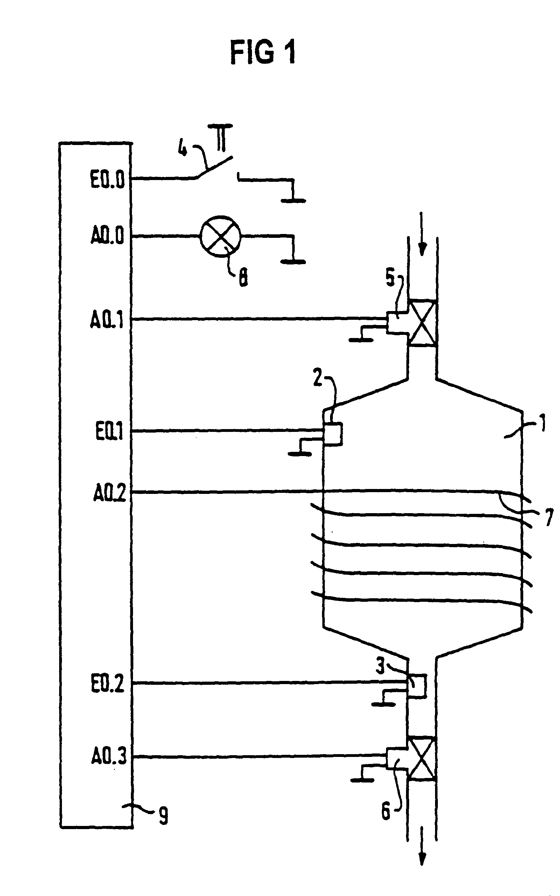

In Figur 1 ist mit 9 eine speicherprogrammierbare Zustandssteuerung bezeichnet, die einen Reaktor 1 aufgrund von Eingangssignalen E0.0, E0.1 und E0.2 steuert. Dabei zeigt das Eingangssignal E0.0 an, daß ein Reaktorzyklus durch einen Taster 4 gestartet ist, und die von Sensoren 2, 3 erzeugten Eingangssignale E0.1, E0.2, daß der Reaktor voll bzw. leer ist. Ein Ausgangssignal A0.0 wird einer Alarmlampe 8 zugeführt und zeigt den Beginn des Reaktorzyklus an. Ausgangssignale A0.1, A0.3 werden Ventilen 5, 6 zum Steuern des Zuund Ablaufs einer Reaktorflüssigkeit aufgeschaltet, und ein Ausgangssignal A0.2 bewirkt das Heizen des Reaktors 1 durch eine Heizung 7.
Eine Steueraufgabe schreibt nun vor, daß ein Reaktorzyklus durch den Taster 4 zu starten und durch die Alarmlampe 8 anzuzeigen ist. 600 Millisekunden nach dem Startvorgang ist das Zulaufventil 5 des leeren Reaktors 1 zu öffnen, das Ablaufventil 6 muß während eines Füllvorgangs geschlossen sein. Weiterhin schreibt die Steueraufgabe vor, daß das Zulaufventil 5 geschlossen werden muß, falls der Reaktor voll ist, und daß der Flüssigkeit im Reaktor 1 für die Dauer von fünf Minuten Wärmeenergie über die Heizung 7 zuzuführen ist. Anschließend ist eine Reaktionszeit von drei Minuten vorgesehen, während dieser die Flüssigkeit auf die Wärmezufuhr reagiert. Sind die drei Minuten abgelaufen, ist der Reaktor zu entleeren. Dazu bleibt das Zulaufventil 5 geschlossen und das Ablaufventil 6 wird geöffnet. Wenn der Reaktor 1 leer ist, wird nach einer Erholungszeit von 30 Sekunden die Alarmlampe 8 ausgeschaltet und damit angezeigt, daß der Reaktorzyklus beendet ist und ein neuer Zyklus gestartet werden kann.

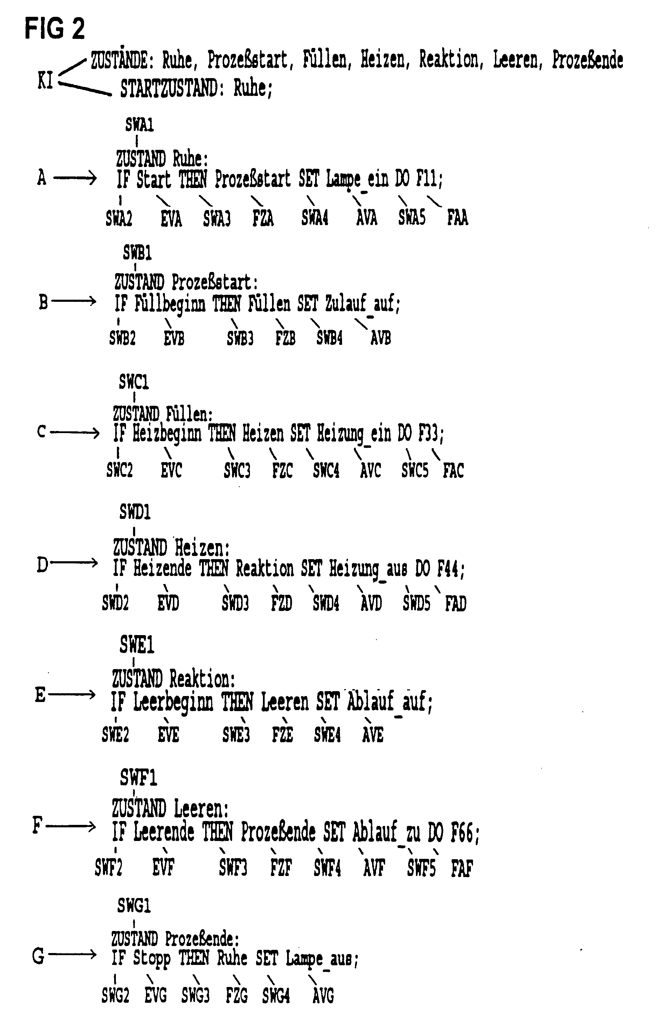

Diese derart formulierte Steueraufgabe setzt ein Programmierer mit einem hier nicht dargestellten Programmiergerät in einen strukturierten Text (Figur 2) um. Das mit einer Anzeigevorrichtung und einem Speicher versehene Programmiergerät weist dazu ein Software-Werkzeug auf, das in dem Speicher hinterlegt ist und auch Anweisungen und Befehle zur Darstellung des strukturierten Textes auf der Anzeigevorrichtung beinhaltet.

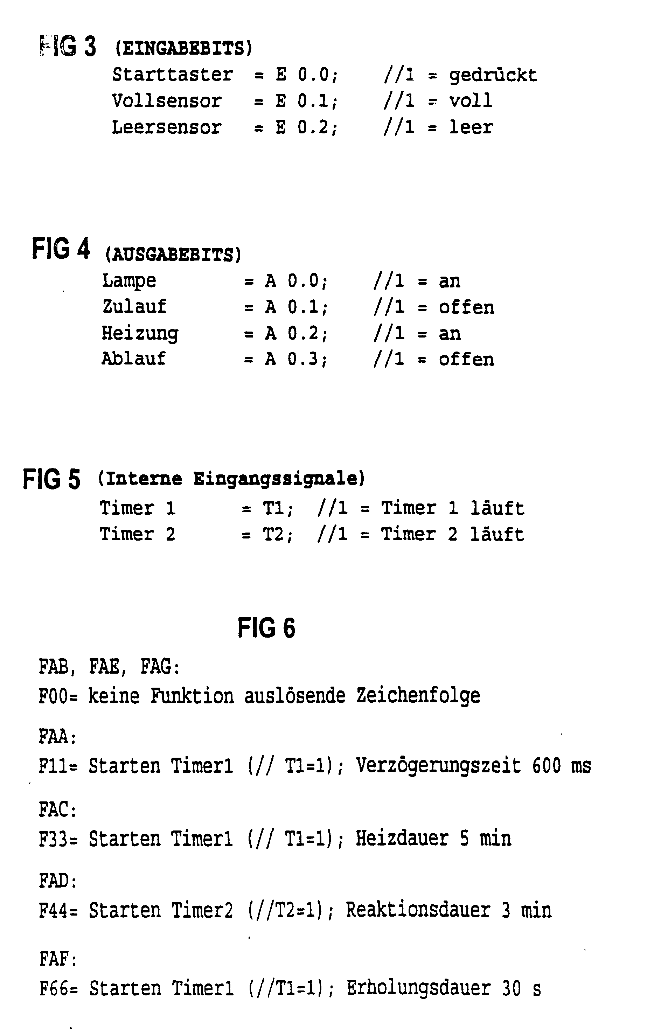

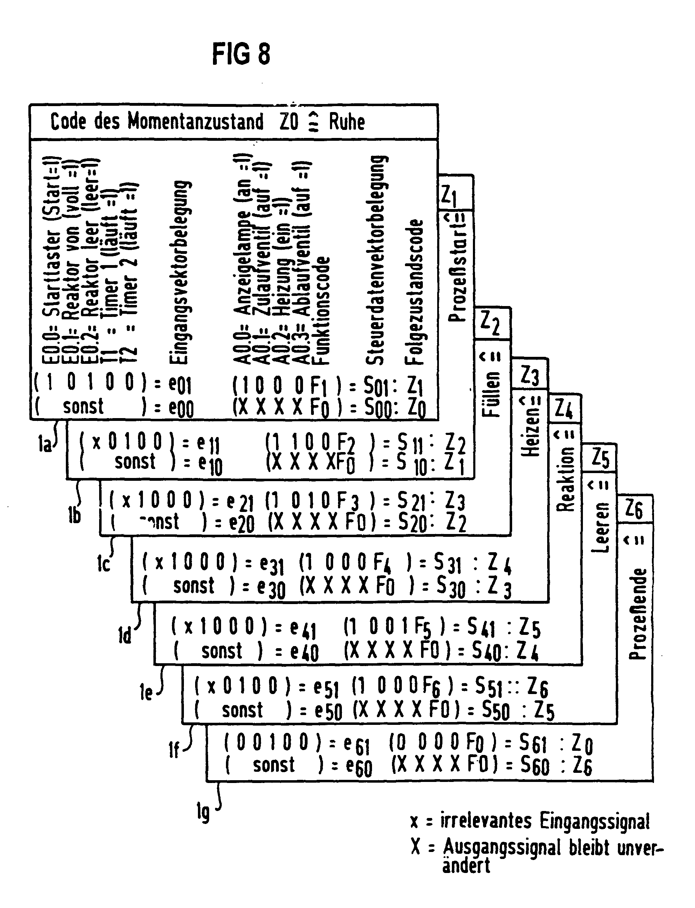

Zur Erläuterung der Art und Weise der Weiterbearbeitung wird zunächst auf Figur 8 verwiesen. Die Figur zeigt ein Steuerungsprogramm in Form einer ebenfalls auf der Anzeigevorrichtung darstellbaren Steuertabelle, welche das Software-Werkzeug, wie im folgenden noch gezeigt wird, aus dem strukturierten Text gemäß Figur 2 erzeugt. Die in den Figuren 2 und 3 veranschaulichten gleichen Teile sind mit gleichen Bezugszeichen versehen. Zur besseren Übersicht ist die Steuertabelle in Blöcke 1a ... 1g unterteilt, von denen jeder Block einem Zustand Z0 ... Z6 zugeordnet und in entsprechenden Speicherbereichen des Speichers hinterlegt ist. Es bedeuten Z0 ... Z6 die Codes der Zustände "Ruhe", "Prozeßstart", "Füllen", "Heizen", "Reaktion", "Leeren" und "Prozeßende", eᵢⱼ Eingangsvektorbelegungen, die aus den Binärwerten der Eingangssignale E0.0 ... und internen Signalen T1, T2 der Zustandssteuerung 9 gebildet werden, und Sᵢⱼ aus den Binärwerten der Ausgangssignale A0.0 ... und Funktionscodes F0 ... F6 gebildete Steuerdatenvektorbelegungen, wobei i = 0, 1 ... 6; j = 0, 1 ist. Weiterhin bedeutet das Zeichen x, daß der diesem Zeichen zugeordnete Binärwert eines Eingangssignals E0.0 ... irrelevant ist, d. h., unabhängig vom Binärwert dieses Eingangssignals wird der entsprechende Eingangs- und Steuerdatenvektor gebildet. Das Zeichen X in der Steuerdatenvektorbelegung besagt, daß die Binärwerte der Ausgangssignale A0.0 ... bei entsprechenden Eingangsvektorbelegungen unverändert bleiben.

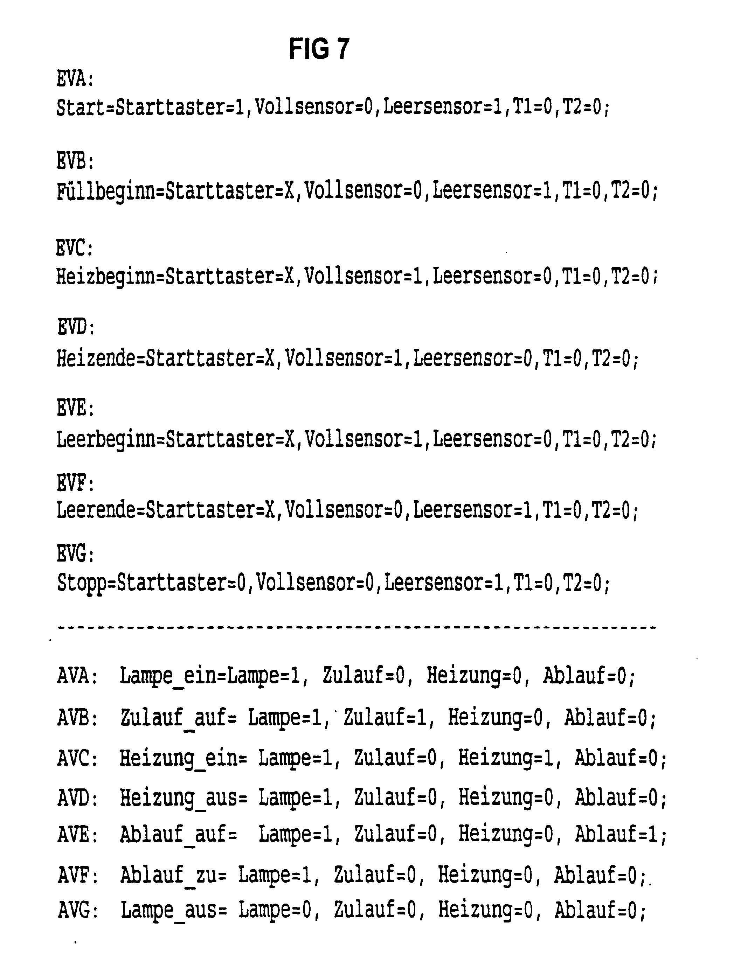

Die Weiterverarbeitung des strukturierten Textes (Figur 2) zum Erstellen des Steuerungsprogramms durch das Software-Werkzeug wird im folgenden näher erläutert.
Im Ausführungsbeispiel ist ein strukturierter Text in sieben Teilstrukturen A ... G (Figur 2) gegliedert, welche jeweils einem Zustand zugeordnet sind. Die Zustände sind in Form von Zeichenfolgen in einer Kopfinformation KI hinterlegt und umfassen entsprechend den Vorgaben der Steueraufgabe (Figur 1, Beschreibung) die Zustände "Prozeßstart", "Füllen (des Reaktors)", "Heizen (der Reaktor-Flüssigkeit)", "Leeren (des Reaktors)" und "Prozeßende". Als Startzustand ist der Zustand "Ruhe" vorgesehen, welcher ebenfalls in der Kopfinformation hinterlegt ist. Die Teilstruktur A weist ein erstes Schlüsselwort SWA1 in Form der Zeichenfolge "Zustand" auf, dem eine einen Momentanzustand kennzeichnende Zeichenfolge "Ruhe" zugeordnet ist. Dieser folgt eine Gruppe aus geordneten Paaren, die jeweils aus einem Schlüsselwort und einer Zeichenfolge bestehen. Ein erstes Paar dieser Gruppe umfaßt ein zweites Schlüsselwort SWA2 (Zeichenfolge "IF") und einen Eingangsvektor EVA in Form einer Zeichenfolge "Start". Ein zweites Paar schließt sich diesem Eingangsvektor EVA an und ist mit einem dritten Schlüsselwort SWA3 (Zeichenfolge "THEN") und einem durch eine Zeichenfolge "Prozeßstart" gekennzeichneten Folgezustand FZA versehen. Ein dem Folgezustand FZA nachgeordnetes drittes Paar umfaßt ein viertes Schlüsselwort SWA4 (Zeichenfolge "SET") und einen Ausgangsvektor AVA in Form einer Zeichenfolge "Lampe_ein". Ein viertes Paar mit einem fünften Schlüsselwort SWA5 (Zeichenfolge "DO") und einem Funktionsaufruf FAA (Zeichenfolge "F11") folgt dem Ausgangsvektor AVA.
In der gleichen Art und Weise sind entsprechend den Vorgaben der Steueraufgabe die Teilstrukturen B ... G formuliert, wobei SWxy (x = B, C, ... G; y = 1, 2, ...) die ersten, zweiten usw. Schlüsselworte, EVk und AVk die Ein- und Ausgangsvektoren, FZk die Folgezustände und FAk (k = B, C, ... G) die Funktionsaufrufe dieser Teilstrukturen B, C, ... G bedeuten. Dabei berücksichtigt der Programmierer, daß für die Teilstrukturen B, E und G kein fünftes Schlüsselwort und kein Funktionsaufruf benötigt wird.
Damit der strukturierte Text in eine Steuertabelle (Figur 8) umgesetzt werden kann, ist es noch erforderlich, sowohl die Ein- und Ausgangsvektorbelegungen als auch die Binärwerte der Ein- und Ausgangssignale gemäß der Steueraufgabe vorzugeben. Es wird festgelegt, daß eine gedrückte Starttaste 4 (Figur 1) durch einen Binärwert 1 (Eingangssignal E0.0 = 1) angezeigt wird. Entsprechend bedeuten E0.1 = 1 bzw. E0.2 = 1 "Der Reaktor ist voll bzw. leer" (Figur 3). Weiterhin wird die Belegung der Ausgangssignale definiert zu A0.0 = 1, falls die Lampe 8 angeschaltet, A0.1 = 1, falls der Zulauf 5 offen (bzw. geöffnet werden soll), A0.2 = 1, falls die Heizung 7 eingeschaltet, und A0.3 = 1, falls das Ablaufventil 6 offen ist bzw. geöffnet werden soll (Figur 4). Zusätzlich sind im vorliegenden Beispiel als weitere Ausgangsgrößen die Funktionsaufrufe in Form der Zeichenfolgen F00 ... F66 von Bedeutung, welche die Dauer der Zustände nach Maßgabe von Zeitschaltereinstellungen der Zustandssteuerung 9 (Figur 1) wiedergeben. Diese bilden interne binäre Eingangssignale T1, T2, die entsprechend den in der Steueraufgabe beschriebenen Vorgaben die Heiz- und Reaktionszeit sowie die Verzögerungszeiten im Hinblick auf das Öffnen des Zulaufventils 5 und das Ausschalten der Lampe 8 steuern. Die Belegung der internen Eingangssignale T1, T2 und der Funktionsaufrufe in Form der Zeichenfolgen F00 ... F66 ist in Figur 5 und 6 dargestellt.
Aufgrund dieser Festlegung und den Vorgaben der Steueraufgabe weiß nun der Programmierer, welche Belegungen (Pegel) der Ein- und Ausgangssignale E0.0, E0.1, E0.2 und A0.0, A0.1, A0.2 relevant sind, und er weiß ferner, welche Folgezustände beim Anlegen der relevanten Eingangssignale, ausgehend von einem Momentanzustand, erreicht und welche Ausgangssignale dann ausgegeben werden müssen, um die Steueraufgabe zu lösen. Entsprechend dieser Kenntnis sind die Ein- und Ausgangsvektoren EVk und AVk (k = A, B, ... G) gemäß Figur 7 zu belegen und schließlich die Teilstrukturen A ... G gemäß Figur 2 zu formulieren.
Es ist selbstverständlich möglich, in den Teilstrukturen A, B ... G anstatt den Zeichenfolgen (Start, ...; Lampe_ein, ...) für die Ein- und Ausgangsvektoren EVk, AVk sowie für Funktionsaufrufe (FAk, ...) die in Figur 6 und Figur 7 dargestellten Belegungen der Ein- und Ausgangsvektoren sowie der Zeichenfolgen F00 ... F66 direkt einzutragen. Zur besseren Übersicht des Programms ist es aber von Vorteil, lediglich die entsprechenden Zeichenfolgen einzutragen und Belegungen in einer separaten Liste entsprechend Figur 6 und Figur 7 zu formulieren.

Ist die Programmierung der Steueraufgabe in Form des beschriebenen strukturierten Textes abgeschlossen, erzeugt das Software-Werkzeug die Steuertabelle gemäß Figur 8. Dazu erzeugt das Software-Werkzeug zunächst aus dem ersten Schlüsselwort SWA1 und der ersten Zeichenfolge "Ruhe" der Teilstruktur A den zugeordneten Momentanzustand in codierter Form Z0 (Figur 8, Bereich 1a) und schließlich aus dem ersten geordneten Paar, bestehend aus dem zweiten Schlüsselwort SWA2 (Zeichenfolge "IF") und dem Eingangsvektor EVA (Zeichenfolge "Start"), unter Berücksichtigung der Belegung der Zeichenfolge "Start" (Figur 7), der Binärwertvorgabe der Ein- und der internen Eingangssignale (Figur 3 und 5) die Eingangsvektorbelegung in codierter Form zu e01 = (10100). Aufgrund des zweiten Paares, bestehend aus drittem Schlüsselwort SWA3 (Zeichenfolge "THEN") und Zeichenfolge "Prozeßstart", erstellt das Software-Werkzeug den Code Z1 des Folgezustands. Aus dem vierten Schlüsselwort SWA4 (Zeichenfolge "SET") und Ausgangsvektor AVA (Zeichenfolge "Lampe") sowie aus fünftem Schlüsselwort SWA5 (Zeichenfolge "DO") und Funktionsaufruf FAA (Zeichenfolge "F11") erzeugt das Software-Werkzeug unter Berücksichtigung der Belegung der Zeichenfolge "Lampe_ein" (Figur 7), der Zeichenfolge F11 (Figur 6) und der Binärwertvorgabe der Ausgabesignale (Figur 4) den Code für die Steuerdatenvektorbelegung zu S01 = (1000F1), wobei F1 einen Funktionscode darstellt, welcher aus der Zeichenfolge F11 gebildet wird. Damit ist die Codierung (Kompilierung) der Teilstruktur A des strukturierten Textes im Hinblick auf einen Zustandswechsel von dem Momentanzustand "Ruhe" in einen Folgezustand "Prozeßstart" für den Fall, daß die Belegung die Form 10100 (= e01) aufweist, abgeschlossen (vergleiche Bereich 1a, Figur 8). In der Teilstruktur A sind keine weiteren Zeichenfolgen vorhanden, was bedeutet, daß für alle anderen möglichen Belegungen des Eingangsvektors kein Zustandswechsel vorgesehen ist, und das Software-Werkzeug erstellt automatisch eine weitere Codezeile im Bereich 1a der Steuertabelle, und zwar eine Eingangsvektorbelegung e00 und eine Steuerdatenvektorbelegung S00, welche einem dem Momentanzustand entsprechenden Folgezustandscode Z0 zugeordnet sind.
Im Steuerbetrieb der speicherprogrammierbaren Zustandssteuerung verursachen die beschriebenen Codezeilen im Bereich 1a der Steuertabelle, daß, ausgehend vom Momentanzustand "Ruhe" (Code Z0), nur dann in den Folgezustand "Prozeßstart" (Code Z1) gewechselt wird, falls der reale aus den aktuell anliegenden Eingangssignalen E0.0, E0.1, E0.2 und den internen Signalen T1, T2 der Zustandssteuerung 9 (Figur 1) gebildete Vektor die Belegung (10100) aufweist, also der vorgegebenen Eingangsvektorbelegung e01 entspricht. Außerdem wird nur für diesen Fall der Steuerdatenvektor S01 = (1000F1) ausgegeben. Die Steuerung bleibt für alle anderen aktuellen Eingangssignale im Momentanzustand "Ruhe" (in Figur 8 durch die Zeichenfolge "sonst" dargestellt).
In der gleichen beschriebenen Art und Weise erzeugt das Software-Werkzeug aus den Teilstrukturen B ... G die Codezeilen in den Bereichen 1b ... 1g der Steuertabelle. In den Teilstrukturen B, E und G fehlt jeweils ein fünftes Schlüsselwort SW5k und ein Funktionsaufruf FAk (k = B, E, G). Dadurch erzeugt das Software-Werkzeug einen Funktionscode F0 für die Steuerdatenvektorbelegungen S11, S41 und S61. Dieser Code ist ohne Bedeutung während des Steuerbetriebs der Zustandssteuerung und bildet keinen Funktionen auslösenden Funktionsaufruf.

Die somit erzeugte Steuertabelle wird in die speicherprogammierbare Zustandssteuerung übertragen, die entsprechend den Vorgaben dieser Tabelle die Steueraufgabe entsprechend der DE-OS 42 26 456 bzw. der DE-OS 37 43 438 löst. Die Übertragung kann dadurch bewirkt werden, daß die Steuertabelle aus dem Speicher des Programmiergeräts ausgelesen, auf eine Diskette oder ein Speichermodul geschrieben und von dort in den Anwenderspeicher der Zustandssteuerung übertragen wird. Die Übertragung kann selbstverständlich auch online über eine geeignete Verbindung des Programmiergeräts mit der Zustandssteuerung erfolgen. Das Software-Werkzeug ist vorteilhaft so ausgebildet, daß auch aus einer vorgegebenen Steuertabelle der dazugehörige strukturierte Text erzeugt werden kann, da alle Informationen des strukturierten Textes umkehrbar eindeutig in der Steuertabelle abgebildet werden.

## Patentansprüche

1. Verfahren zum Programmieren einer speicherprogrammierbaren Zustandssteuerung (9), mit einem Programmiergerät, das eine Anzeigevorrichtung und einen Speicher aufweist, in dem eine mit einem Software-Werkzeug erstellte auf der Anzeigevorrichtung darstellbare Steueraufgabe hinterlegt ist und aus der das Software-Werkzeug eine in der Zustandssteuerung (9) ablauffähige Steuertabelle erstellt, indem das Software-Werkzeug einen Momentanzustand, eine Eingangsvektorbelegung, einen Folgezustand und eine Steuerdatenvektorbelegung jeweils in codierter Form erzeugt,
**dadurch gekennzeichnet, dass**
die Steueraufgabe in Form eines strukturierten Textes darstellbar ist, welcher mehrere Teilstrukturen (A, B, ... G) aufweist, die jeweils versehen sind mit
- einem ersten Schlüsselwort (SWk1, k = A, B, ... G), welchem eine einen Momentanzustand kennzeichnende erste Zeichenfolge ("Ruhe", "Prozessstart", ...) folgt,
- einem dieser Zeichenfolge nachgeordneten zweiten Schlüsselwort (SWk2, k = A, B, ... G), welchem eine einen Eingangsvektor kennzeichnende zweite Zeichenfolge (EVk, k = A, B, ... G) folgt,
- einem dieser Zeichenfolge nachgeordneten dritten Schlüsselwort (SWk3, k = A, B, ... G), welchem eine einen Folgezustand kennzeichnende dritte Zeichenfolge ("Prozessstart", "Füllen", ...) folgt,
- einem dieser Zeichenfolge nachgeordneten vierten Schlüsselwort (SWk4, k = A, B, ... G), welchem eine einen Ausgangsvektor kennzeichnende vierte Zeichenfolge (AVk, k = A, B, ... G) folgt,
wobei die Belegungen der die Eingangsvektoren kennzeichnenden Zeichenfolgen (EVk, k = A, B, ...) und die Belegung der Eingangssignale (E 0.0, E 0.1, ...) sowie die Belegung der die Ausgangsvektoren kennzeichnenden Zeichenfolgen (AVk, k = A, B, ...) und die Belegung der Ausgangssignale (A 0.0, A 0.1,. ) vorgebbar sind, und
wobei das Software-Werkzeug aus den Schlüsselworten und Zeichenfolgen die Steuertabelle erstellt, indem das Software-Werkzeug für jede Teilstruktur jeweils in codierter Form erstellt:
- aus dem ersten Schlüsselwort und der ersten Zeichenfolge einen Momentanzustand (Z0, Z1, ...),
- aus dem zweiten Schlüsselwort und der zweiten Zeichenfolge eine Eingangsvektorbelegung (e00, e01, ...),
- aus dem dritten Schlüsselwort und der dritten Zeichenfolge einen Folgezustand (Z0, Z1, ...) und
- aus dem vierten Schlüsselwort und der vierten Zeichenfolge eine Steuerdatenvektorbelegung (S00, S01, ...).

2. Verfahren nach Anspruch 1, **dadurch gekennzeichnet, dass** der vierten Zeichenfolge ein fünftes Schlüsselwort (SW5k, k = A, B, ...) nachgeordnet ist, welchem ein Funktionsaufruf (FAk, k = A, B, ...) folgt, wobei das Software-Werkzeug aus dem fünften Schlüsselwort und dem Funktionsaufruf die jeweiligen Steuerdatenvektorbelegungen (S00, S01, ...) um einen diesem Funktionsaufruf zugeordneten Funktionscode ergänzt.

3. Verfahren nach Anspruch 1 oder 2, **dadurch gekennzeichnet, dass** in einer Kopfinformation (KI) des strukturierten Textes die möglichen Prozesszustände und ein Startzustand in Form von Zeichenfolgen hinterlegt sind.

4. Verfahren nach einem der Ansprüche 1 bis 3, **dadurch gekennzeichnet, dass** die Steuertabelle in den strukturierten Text rückführbar ist.

5. Programmiergerät mit einem Software-Werkzeug zum Programmieren einer speicherprogrammierbaren Zustandssteuerung (9), wobei das Programmiergerät eine Anzeigevorrichtung und einen Speicher aufweist, in dem eine mit dem Software-Werkzeug erstellte auf der Anzeigevorrichtung darstellbare Steueraufgabe hinterlegt ist und aus der das Software-Werkzeug eine in der Zustandssteuerung (9) ablauffähige Steuertabelle erstellt, indem das Software-Werkzeug einen Momentanzustand, eine Eingangsvektorbelegung, einen Folgezustand und eine Steuerdatenvektorbelegung jeweils in codierter Form erzeugt,
**dadurch gekennzeichnet, dass** durch das Software-Werkzeug die Steueraufgabe in Form eines strukturierten Textes darstellbar ist, welcher mehrere Teilstrukturen (A, B, ... G) aufweist, die jeweils versehen sind mit
- einem ersten Schlüsselwort (SWk1, k = A, B, ... G), welchem eine einen Momentanzustand kennzeichnende erste Zeichenfolge ("Ruhe", "Prozessstart", ...) folgt,
- einem dieser Zeichenfolge nachgeordneten zweiten Schlüsselwort (SWk2, k = A, B, ... G), welchem eine einen Eingangsvektor kennzeichnende zweite Zeichenfolge (EVk, k = A, B, ... G) folgt,
- einem dieser Zeichenfolge nachgeordneten dritten Schlüsselwort (SWk3, k = A, B, ... G), welchem eine einen Folgezustand kennzeichnende dritte Zeichenfolge ("Prozessstart", "Füllen", ...) folgt,
- einem dieser Zeichenfolge nachgeordneten vierten Schlüsselwort (SWk4, k = A, B, ... G), welchem eine einen Ausgangsvektor kennzeichnende vierte Zeichenfolge (AVk, k = A, B, ... G) folgt,
wobei die Belegungen der die Eingangsvektoren kennzeichnenden Zeichenfolgen (EVk, k = A, B, ...) und die Belegung der Eingangssignale (E 0.0, E 0.1, ...) sowie die Belegung der die Ausgangsvektoren kennzeichnenden Zeichenfolgen (AVk, k = A, B, ...) und die Belegung der Ausgangssignale (A 0.0, A 0.1,. ) vorgebbar sind, und
wobei das Software-Werkzeug aus den Schlüsselworten und Zeichenfolgen die Steuertabelle erstellt, indem das Software-Werkzeug für jede Teilstruktur jeweils in codierter Form erstellt:
- aus dem ersten Schlüsselwort und der ersten Zeichenfolge einen Momentanzustand (Z0, Z1, ...),
- aus dem zweiten Schlüsselwort und der zweiten Zeichenfolge eine Eingangsvektorbelegung (e00, e01, ...),
- aus dem dritten Schlüsselwort und der dritten Zeichenfolge einen Folgezustand (Z0, Z1, ...) und
- aus dem vierten Schlüsselwort und der vierten Zeichenfolge eine Steuerdatenvektorbelegung (S00, S01, ...).

6. Programmiergerät nach Anspruch 5, **dadurch gekennzeichnet, dass** durch das Software-Werkzeug darstellbar ist ein der vierten Zeichenfolge nachgeordnetes fünftes Schlüsselwort (SW5k, k = A, B, ...), welchem ein Funktionsaufruf (FAk, k = A, B, ...) folgt, wobei das Software-Werkzeug aus dem fünften Schlüsselwort und dem Funktionsaufruf die jeweiligen Steuerdatenvektorbelegungen (S00, S01, ...) um einen diesem Funktionsaufruf zugeordneten Funktionscode ergänzt.

7. Programmiergerät nach Anspruch 5 oder 6, **dadurch gekennzeichnet, dass** durch das Software-Werkzeug in einer Kopfinformation (KI) des strukturierten Textes die möglichen Prozesszustände und ein Startzustand in Form von Zeichenfolgen hinterlegbar sind.

8. Programmiergerät nach einem der Ansprüche 5 bis 7, **dadurch gekennzeichnet, dass** durch das Software-Werkzeug die Steuertabelle in den strukturierten Text rückführbar ist.

## Claims

1. Method for programming a memory-programmable status control unit (9), with a programming device, which has a display device and a memory, in which a control task, constructed by a software tool and able to be represented on the display device, is deposited and from which the software tool constructs a control table executable in the status control unit (9), in that the software tool generates a current status, an input vector assignment, a subsequent status and a control data vector assignment in each case in coded form,
**characterised in that** the control task can be represented in the form of a structured text which has several partial structures (A, B, ... G), provided in each case with
- a first key word (SWkl, k = A, B, ... G), followed by a first character string ("rest", "process start", ...) characterising a current status,
- a second key word (SWk2, k = A, B, ... G) arranged after this character string, followed by a second character string (EVk, k = A, B, ... G) characterising an input vector,
- a third key word (SWk3, k = A, B, ... G) arranged after this character string, followed by a third character string ("process start", "filling") characterising a subsequent status and
- a fourth key word (SWk4, k = A, B, ... G) arranged after this character string, followed by a fourth character string (AVk, k = A, B, ... G) characterising an output vector,
wherein the assignments of the character strings (EVk, k = A, B, ...) characterising the input vectors and the assignment of the input signals (EO.0, EO.1, ...) and the assignment of the character strings (AVk, k = A, B, ...) characterising the output vectors and the assignment of the output signals (AO.0, AO.1, ...) can be specified and
wherein the software tool constructs the control table from the key words and character strings **in that** the software tool constructs for each partial structure in each case in coded form:
- from the first key word and the first character string a current status (Z0, Z1, ...),
- from the second key word and the second character string an input vector assignment (e00, e01, ...),
- from the third key word and the third character string a subsequent status (Z0, Z1, ...) and
- from the fourth key word and the fourth character string a control data vector assignment (S00, S01, ...).

2. Method according to claim 1, **characterised in that**, arranged after the fourth character string is a fifth key word (SWk5, k = A, B, ...), followed by a function invocation (FAk, k = A, B, ...), wherein from the fifth key word and the function invocation the software tool supplements the respective control data vector assignments (S00, S01, ...) by a function code allocated to this function invocation.

3. Method according to claim 1 or 2, **characterised in that** the possible process statuses and a starting status are deposited in head information (KI) of the structured text in the form of character strings.

4. Method according to one of claims 1 to 3,
**characterised in that** the control table can be restored to the structured text.

5. Programming device with a software tool for programming a memory-programmable status control unit (9), wherein the programming device has a display device and a memory, in which a control task, constructed by the software tool and able to be represented on the display device, is deposited and from which the software tool constructs a control table executable in the status control unit (9), in that the software tool generates a current status, an input vector assignment, a subsequent status and a control data vector assignment in each case in coded form,
**characterised in that** by means of the software tool the control task can be represented in the form of a structured text which has several partial structures (A, B, ... G), provided in each case with
- a first key word (SWk1, k = A, B, ... G), followed by a first character string ("rest", "process start", ...) characterising a current status,
- a second key word (SWk2, k = A, B, ... G) arranged after this character string, followed by a second character string (EVk, k = A, B, ... G) characterising an input vector,
- a third key word (SWk3, k = A, B, ... G) arranged after this character string, followed by a third character string ("process start", "filling") characterising a subsequent status and
- a fourth key word (SWk4, k = A, B, ... G) arranged after this character string, followed by a fourth character string (AVk, k = A, B, ... G) characterising an output vector,
wherein the assignments of the character strings (EVk, k = A, B, ... G) characterising the input vectors and the assignment of the input signals (EO.0, EO.1, ...) and the assignment of the character strings (AVk, k = A, B, ...) characterising the output vectors and the assignment of the output signals (AO.0, AO.1, ...) can be specified and
wherein the software tool constructs the control table from the key words and character strings **in that** the software tool constructs for each partial structure in each case in coded form:
- from the first key word and the first character string a current status (Z0, Z1, ...),
- from the second key word and the second character string an input vector assignment (e00, e01, ...),
- from the third key word and the third character string a subsequent status (Z0, Z1, ...) and
- from the fourth key word and the fourth character string a control data vector assignment (S00, S01, ...).

6. Programming device according to claim 5,
**characterised in that**, representable by the software tool, arranged after the fourth character string is a fifth key word (SWk5, k = A, B, ...), followed by a function invocation (FAk, k = A, B, ...), wherein from the fifth key word and the function invocation the software tool supplements the respective control data vector assignments (S00, S01, ...) by a function code allocated to this function invocation.

7. Programming device according to claim 5 or 6,
**characterised in that** by means of the software tool the possible process statuses and a starting status can be deposited in head information (KI) of the structured text in the form of character strings.

8. Programming device according to one of claims 5 to 7,
**characterised in that** by means of the software tool the control table can be restored to the structured text.

## Revendications

1. Procédé permettant de programmer une commande (9) d'état à mémoire programmable, comprenant un programmateur, qui présente un dispositif d'affichage et une mémoire, dans laquelle est déposée une tâche de commande représentable sur le dispositif d'affichage et élaborée par un outil logiciel et à partir de laquelle l'outil logiciel élabore un tableau de commande pouvant se dérouler dans la commande (9) d'état, l'outil logiciel générant un état momentané, une valuation d'un vecteur d'entrée, un état suivant et une valuation d'un vecteur de données de commande respectivement sous forme codée,
**caractérisé en ce que**
la tâche de commande est représentable sous la forme d'un texte structuré, qui présente plusieurs structures (A, B, ... G) élémentaires, qui sont pourvues respectivement
- d'un premier mot (SWk1, k = A, B, ... G) clé, qui est suivi par une première série (« repos », « début du processus », ...) de caractères identifiant un état momentané,
- d'un deuxième mot (SWk2, k = A, B, ... G) clé disposé après cette série de caractères, qui est suivi par une deuxième série (EVk, k = A, B, ... G) de caractères identifiant un vecteur d'entrée,
- d'un troisième mot (SWk3, k = A, B, ... G) clé disposé après cette série de caractères, qui est suivi par une troisième série (« début du processus », « remplissage », ...) de caractères identifiant un état suivant,
- d'un quatrième mot (SWk4, k = A, B, ... G) clé disposé après cette série de caractères, qui est suivi par une quatrième série (AVk, k = A, B, ... G) de caractères identifiant un vecteur de sortie,
les valuations des séries (EVk, k = A, B, ...) identifiant les vecteurs d'entrée et la valuation des signaux (E0.0, E0.1, ...) d'entrée tout comme la valuation des séries (AVk, k = A, B, ...) de caractères identifiant les vecteurs de sortie et la valuation des signaux (A0.0, A0.1, ...) de sortie pouvant être spécifiées, et l'outil logiciel élaborant le tableau de commande à partir des mots clé et des séries de caractères, en élaborant pour chaque structure élémentaire respectivement sous forme codée :
- à partir du premier mot clé et de la première série de caractères un état (Z0, Z1, ...) momentané,
- à partir du deuxième mot clé et de la deuxième série de caractères une valuation (e00, e01, ...) d'un vecteur d'entrée,
- à partir du troisième mot clé et de la troisième série de caractères un état (Z0, Z1, ...) suivant et
- à partir du quatrième mot clé et de la quatrième série de caractères une valuation (S00, S01, ...) d'un vecteur de données de commande.

2. Procédé selon la revendication 1, **caractérisé en ce qu'**un cinquième mot (SW5k, k = A, B, ...) clé est disposé après la quatrième série de caractères, lequel est suivi par un appel (FAk, k = A, B, ...) de fonction, l'outil logiciel complétant d'un code de fonction attribué à cet appel de la fonction à partir du cinquième mot clé et de l'appel de la fonction les valuations (S00, S01, ...) respectives des vecteurs de données de commande.

3. Procédé selon la revendication 1 ou 2, **caractérisé en ce que** les états possibles du processus et un état initial sont déposés sous la forme de séries de caractères dans une information (KI) d'entête du texte structuré.

4. Procédé selon l'une des revendications 1 à 3, **caractérisé en ce que** le tableau de commande peut être retourné au texte structuré.

5. Programmateur comprenant un outil logiciel permettant de programmer une commande (9) d'état à mémoire programmable, le programmateur présentant un dispositif d'affichage et une mémoire, une tâche de commande représentable sur le dispositif d'affichage et élaborée par l'outil logiciel, étant déposée et à partir de laquelle l'outil logiciel élaborant un tableau de commande pouvant se dérouler dans la commande (9) d'état, l'outil logiciel générant un état momentané, une valuation d'un vecteur d'entrée, un état suivant et une valuation d'un vecteur de données de commande respectivement sous forme codée,
**caractérisé en ce que** la tâche de commande peut être représentée sous la forme d'un texte structuré par l'outil logiciel, le texte présentant plusieurs structures (A, B, ... G) élémentaires, qui sont pourvues respectivement
- d'un premier mot (SWk1, k = A, B, ... G) clé, qui est suivi par une première série (« repos », « début du processus », ...) de caractères identifiant un état momentané,
- d'un deuxième mot (SWk2, k = A, B, ... G) clé disposé après cette série de caractères, qui est suivi par une deuxième série (EVk, k = A, B, ... G) de caractères identifiant un vecteur d'entrée,
- d'un troisième mot (SWk3, k = A, B, ... G) clé disposé après cette série de caractères, qui est suivi par une troisième série (« début du processus », « remplissage », ...) de caractères identifiant un état suivant,
- d'un quatrième mot (SWk4, k = A, B, ... G) clé disposé après cette série de caractères, qui est suivi par une quatrième série (AVk, k = A, B, ... G) de caractères identifiant un vecteur de sortie,
les valuations des séries (EVk, k = A, B, ...) de caractères identifiant les vecteurs d'entrée et la valuation des signaux (E0.0, E0.1, ...) d'entrée tout comme la valuation des séries (AVk, k = A, B, ...) de caractères identifiant les vecteurs de sortie et la valuation des signaux (A0.0, A0.1, ...) de sortie pouvant être spécifiées, et
l'outil logiciel élaborant le tableau de commande à partir des mots clés et des séries de caractères, en élaborant pour chaque structure élémentaire respectivement sous forme codée :
- un état (Z0, Z1, ...) momentané à partir du premier mot clé et de la première série de caractères,
- une valuation (e00, e01, ...) d'un vecteur d'entrée à partir du deuxième mot clé et de la deuxième série de caractères,
- un état (Z0, Z1, ...) suivant à partir du troisième mot clé et de la troisième série de caractères et
- une valuation (S00, S01, ...) d'un vecteur de données de commande à partir du quatrième mot clé et de la quatrième série de caractères.

6. Programmateur selon la revendication 5, **caractérisé en ce qu'**un cinquième mot (SWk5, k= A, B, ...) clé disposé après la quatrième série de caractères représentable par l'outil logiciel, mot clé suivi par un appel (FAk, k = A, B, ...) de fonction, l'outil logiciel complétant d'un code de la fonction attribué à cet appel de la fonction les valuations (S00, S01, ...) respectives des vecteurs de données de commande à partir du cinquième mot clé et de l'appel de la fonction.

7. Programmateur selon la revendication 5 ou 6, **caractérisé en ce que** les états possibles du processus et un état initial peuvent être déposés sous la forme de séries de caractères par l'outil logiciel dans une information (KI) d'entête du texte structuré.

8. Programmateur selon l'une des revendications 5 à 7, **caractérisé en ce que** le tableau de commande peut être retourné par l'outil logiciel au texte structuré.
